(19) Europäisches Patentamt
European Patent Office
Office européen des brevets

(11) Numéro de publication: **0 415 816 A1**

# (12) DEMANDE DE BREVET EUROPEEN

(21) Numéro de dépôt: **90402311.6**

(22) Date de dépôt: **20.08.90**

(51) Int. Cl.5: **C09B 23/14**, C09B 51/00, G02F 1/35

(30) Priorité: **29.08.89 FR 8911326**

(43) Date de publication de la demande: **06.03.91 Bulletin 91/10**

(84) Etats contractants désignés: **BE CH DE GB GR LI NL**

(71) Demandeur: **THOMSON-CSF**
**51, Esplanade du Général de Gaulle**
**F-92800 Puteaux(FR)**

(72) Inventeur: **Le Barny, Pierre**
**THOMSON-CSF, SCPI, Cédex 67**
**F-92045 Paris la Défense(FR)**
Inventeur: **Broussoux, Dominique**
**THOMSON-CSF, SCPI, Cédex 67**
**F-92045 Paris la Défense(FR)**

(74) Mandataire: **Guérin, Michel et al**
**THOMSON-CSF SCPI**
**F-92045 PARIS LA DEFENSE CEDEX 67(FR)**

## (54) Polymères actifs en optique non linéaire.

(57) L'invention concerne un polymère actif en optique non linéaire, dopé avec un colorant dont les molécules sont formées d'un ensemble constitué d'un système à électrons π conjugués possédant à l'une de ses extrémités un groupe accepteur d'électrons, à son autre extrémité un groupe donneur d'électrons, un ou plusieurs groupes procurant au colorant une solubilité élevée dans les polymères ferroélectriques étant rattaché audit ensemble du côté du groupe donneur d'électrons.

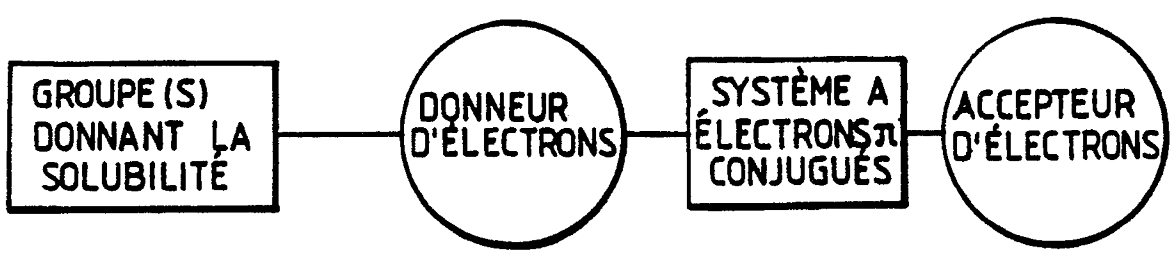


FIG.1

EP 0 415 816 A1

## POLYMERES ACTIFS EN OPTIQUE NON LINEAIRE

La présente invention concerne des molécules de colorants présentant une solubilité importante dans des polymères actifs en optique non linéaire et notamment dans des polymères ferroélectriques.

L'intérêt des matériaux organiques dans le domaine du traitement du signal optique est maintenant reconnu depuis plusieurs années.

En effet, certains matériaux organiques possèdent des coefficients non linéaires très importants. De plus, ils ont des temps de réponse plus courts que les matériaux inorganiques tels le niobate de lithium $LiNbO_3$, le dihydrogénophosphate de potassium ou KDP, l'arséniure de gallium GaAs, etc .... . D'autre part, ils ont un seuil de dommage optique (encore désigné sous le terme de photoréfringence) plus élevé que les composés minéraux.

Parmi les matériaux organiques, les polymères orientés jouent un rôle privilégié grâce à leur facilité de mise en oeuvre (obtention aisée de films minces), leur compatibilité avec les substrats inorganiques comme les semiconducteurs, leur diversité et leur faible coût.

Pour présenter des effets non linéaires du second ordre, les polymères doivent posséder des groupements ayant une forte hyperpolarisabilité du second ordre , soit sous forme de solution, soit liées chimiquement à leur squelette. De plus, ces molécules doivent être organisées dans le polymère de manière que la structure obtenue soit non-centrosymétrique. Cette orientation est obtenue par application d'un champ électrique continu. Ce champ électrique agit sur le moment dipolaire que présente les entités optiquement non linéaires à l'état fondamental, les orientant préférentiellement dans le sens du champ.

Trois types de polymères peuvent servir de matrice aux molécules ayant une forte valeur de et que l'on désignent sous le terme de colorants :

- les polymères amorphes comme le polyméthacrylate de méthyle ou PMMA ;
- les polymères cristaux liquides à chaînes latérales ;
- les polymères ferroélectriques.

Après polarisation, les polymères ferroélectriques possèdent des propriétés optiques non linéaires du second ordre. En effet, pour les polymères ferroélectriques comme par exemple le copolymère de difluorure de vinylidène-trifluorure de vinylidène $P(VF_2 - VF_3)$ ou le copolymère alterné dicyanure de vinylidène-acétate de vinyle P(VDCN - VAc), les dipôles respectifs C-F ou C=N s'orientent dans la direction du champ appliqué et ceci de manière permanente. Cette stabilité dans le temps de l'orientation des dipôles dans les polymères ferroélectriques est un avantage certain sur les copolymères amorphes ou cristaux liquides. Mais, les susceptibilités d'ordre deux $^{(2)}$ ainsi obtenues sont faibles puisque l'hyperpolarisabilité des liaisons C-F ou C=N est très faible. Ainsi, la valeur du plus grand coefficient ($d_{33}$) du tenseur de susceptibilité d'ordre deux est la suivante :

- pour le $P(VF_2 - VF_3)$ 75/25 (75 % en moles de $VF_2$ pour 25 % en moles de $VF_3$), $d_{33}$ = 0,6 pm/V à une longueur d'onde de 1,06 $\mu$m ;
- pour le P (VDCN - VAc), $d_{33}$ = 0,4 pm/V à = 1,06 $\mu$m.

Afin d'augmenter la valeur de $d_{33}$, plusieurs auteurs ont proposé de dissoudre un colorant dans le polymère ferroélectrique et d'utiliser le champ interne qui règne à l'intérieur d'un tel matériau après polarisation pour garder dans le temps les propriétés optiques du second ordre (voir par exemple British Telecom Research Laboratories, J.R. Hill et al., Proceedings of 1st International Conference ou Electrical Optical and Acoustical Properties of Polymers, 1988). Les colorants utilisés par ces auteurs présentent une forte hyperpolarisabilité mais ne possèdent pas une bonne transparence dans le visible.

Ce manque de transparence conduit à limiter les utilisations en structure guide d'onde dans des gammes de fréquence > 0,8 $\mu$m. En effet, l'absorption limite l'utilisation de ces matériaux en structure modulateur électrooptique à des longueurs d'onde supérieures à 0,8 $\mu$m et en structure géométrique de seconde harmonique à des longueurs d'onde de pompe supérieures à 1 $\mu$m.

Afin de pallier ces inconvénients et selon la présente invention, on a mis au point une nouvelle famille de composés ayant un maximum d'absorption situé en dessous de 430 nm et utilisables en optique non linéaire. Ces composés utilisent des colorants qui possèdent une structure particulière qui permet, après formation d'une solution solide (système "guest-host") avec un polymère ferroélectrique et polarisation par un champ électrique continu, de donner naissance à des effets non linéaires du second ordre en optique. Ces effets peuvent être mis à profit dans la réalisation d'un modulateur électrooptique utilisant une onde électromagnétique dont la longueur d'onde peut être comprise entre 0,6 et 2 $\mu$m, ou d'un doubleur de fréquence opérant avec des longueurs d'onde de pompe comprises entre 0,8 et 2 $\mu$m.

L'invention a donc pour objet un composé comprenant un polymère ferroélectrique et un colorant, actif en optique non linéaire, caractérisé en ce que ce colorant a ses molécules formées d'un ensemble

constitué d'un système à électrons ¶ conjugués possédant à l'une de ses extrémités un groupe accepteur d'électrons, à son autre extrémité un groupe donneur d'électrons, un ou plusieurs groupes procurant au colorant une solubilité élevée dans les polymères ferroélectriques étant rattaché audit ensemble du côté du groupe donneur d'électrons.

L'invention a également pour objet de nouveaux colorants destinés notamment à être incorporés à un polymère ferroélectrique utilisable en optique non linéaire.

L'invention sera mieux comprise et d'autres avantages apparaîtront à la lecture de la description qui va suivre, donnée à titre non limitatif, accompagnée par les dessins annexés parmi lesquels :

- la figure 1 illustre la structure d'une molécule de colorant selon l'invention ;
- les figures 2 à 10 représentent des formules de molécules de colorants selon l'invention ;
- les figures 11 à 15 sont des schémas réactionnels de synthèse de colorants selon l'invention.

Une molécule de colorant utilisé selon la présente invention possède la structure particulière illustrée par la figure 1. Cette structure comprend :

- un ensemble constitué de la manière suivante : groupe donneur d'électrons - système à électrons ¶ conjugués -groupe d'accepteur d'électrons, et destiné à procurer une forte hyperpolarisabilité ,
- un ou plusieurs groupes donnant la solubilité dans les polymères ferroélectriques et rattachés à l'ensemble précédent du côté du groupe donneur d'électrons.

Ces colorants présentent les propriétés suivantes :

- leur structure chimique est choisie de manière que le système guest-host, formé en mélangeant le polymère ferroélectrique et le colorant, ait un maximum d'absorption en dessous de 430 nm,
- le système guest-host, après polarisation, possèdera une susceptibilité du second ordre suffisante pour envisager les applications en optique non linéaire,
- la solubilité du colorant sera très grande,
- le colorant augmentera de façon significative l'indice du polymère ferroélectrique dans lequel il sera dissous et permettra ainsi de réaliser des guides d'onde.

Concernant cette dernière propriété, il convient de signaler que les polymères ferroélectriques connus ont un indice de réfraction n faible, ce qui limite leur utilisation en structure guide d'onde, par exemple :

- pour P ($VF_2$ - $VF_3$), n = 1,42 à = 0,63 $\mu$m,
- pour P (VDCN - VAc), n = 1,47 à = 0,63 $\mu$m.

Les figures 2 à 10 représentent des formules de molécules de colorants selon l'invention.

Pour les exemples constitués par les formules des figures 2 à 10 :

- le système à électrons ¶ conjugués est constitué par un ou deux noyaux benzéniques,
- le groupe accepteur d'électrons est soit - $NO_2$ (formules des figures 2, 3, 5, 6 et 7), soit - CH = $C(CN)_2$ - (formules des figures 4, 8, 9 et 10),
- le groupe donneur d'électrons est constitué soit à partir d'un atome d'azote (formules des figures 2 à 5, 9 et 10), soit à partir d'un atome de soufre (formules des figures 6 à 8),
- le ou les groupes donnant la solubilité dans les polymères ferroélectriques sont ceux rattachés sur les figures à gauche soit de l'atome d'azote, soit de l'atome de soufre.

Pour la formule de la figure 2, n est égal à 1 ou 2, $R_1$ est $C_m H_{2m+1}$ (avec 1 < m < 10) ou $C_m F_{2m+1}$ - (avec 1 < m < 10) et $R_2$ est H ou $C_pH_{2p+1}$ (avec 1 < p < 10).

Pour la formule de la figure 3, n est égal à 1 ou 2, R est $C_m H_{2m+1}$ (avec 1 < m < 10) ou $C_m F_{2m+1}$ - (avec 1 < m < 10) et 2 < x < 10).

Pour la formule de la figure 4, R est $c_mH_{2m+1}$ (avec 1 < m < 10) ou $C_mF_{2m+1}$ (avec 1 < m < 10).

Pour la formule de la figure 5, n est égal à 1 ou 2, $R_1$ est $C_m$ est $C_m H_{2m+1}$ (avec 1 < m < 10) ou $C_m F_{2m+1}$ (avec 1 < m <10), $R_2$ est H ou $C_p H_{2p+1}$ (avec 1 < p < 10) et 2 < x < 10).

Pour la formule de la figure 6, n est égal à 1 ou 2 et R est $C_m H_{2m+1}$ (avec 1 < m < 10) ou $C_m F_{2m+1}$ - (avec 1 < m < 10).

Pour la formule de la figure 7, n est égal à 1 ou 2, R est $C_m F_{2m+1}$ (avec 1 < m < 10) ou $C_m F_{2m+1}$ - (avec 1 < m < 10) et 2 < x < 10.

Pour la formule de la figure 8, R est $C_m H_{2m+1}$ (avec 1 < m < 10) ou $C_m F_{2m+1}$ (avec 1 < m < 10) et 2 < x < 10.

Pour la formule de la figure 9, R est $C_m H_{2m+1}$ (avec 1 < m < 10) et 2 < x < 10.

Pour la formule de la figure 10, $R_1$ est $C_m H_{2m+1}$ (avec 1 < m < 10) ou $C_m F_{2m+1}$ (avec 1 < m < 10), $R_2$ est H ou $C_p H_{2p+1}$ (avec 1 < p < 10) et 2 < x < 10.

Quelques exemples de synthèse des molécules de colorant selon l'invention vont maintenant être décrits :

EXEMPLE I

Cet exemple concerne l'élaboration de la molécule représentée à la figure 2 et pour laquelle $R_1$ = $C_2H_5$, $R_2$ = H et n = 1.

Il s'agit donc du 4 (N acétate d'éthyle amino) nitrobenzène. Ce colorant est synthétisé en une étape à partir de la paranitroaniline selon le schéma réactionnel représenté à la figure 11.

La synthèse se fait de la manière suivante :

Dans un erlenmeyer de 250 ml, on introduit 5g de paranitroaniline, 60 g de bromoacétate d'éthyle Br - $CH_2$ $COOC_2H_5$, 60 g d'hydrogénocarbonate de sodium $NaHCO_3$, 100 ml de diméthylformamide (DMF) et 5 gouttes d'aliquat 336 qui est un produit bien connu de l'homme de l'art. On chauffe à 90 °C pendant 16 heures en agitant.

Le milieu réactionnel est coulé dans l'eau et un précipité jaune apparaît. Le solide est séparé par filtration, lavé à l'eau puis à l'hexane.

Le produit brut est recristallisé dans le méthanol. On obtient 6,37 g de colorant. Le rendement de la réaction est de 78,5 %. Le point de fusion du colorant obtenu est de 135,5°C.

Le maximum d'absorption est obtenu pour = 362,7 nm (spectre UV fait avec le chloroforme comme solvant).

Ce colorant est soluble jusqu'à 25 % en poids dans le copolymère P (VDCN - VAc) et a permis d'obtenir après orientation sous champ électrique un coefficient $d_{33}$ égal à 2 pm/V à 1,06 $\mu$m.

EXEMPLE II

Cet exemple concerne l'élaboration de la molécule représentée à la figure 2 et pour laquelle $R_1$ = $C_2H_5$, $R_2$ = H et n = 2. Il s'agit donc du 4 (N acétate d'éthyle amino) 4′ nitrobiphényle. Ce colorant est synthétisé en trois étapes à partir du 4 nitrobiphényle selon le schéma réactionnel représenté à la figure 12.

Le 4 - 4′ dinitrobiphényle a été préparé selon la méthode de F. BELL et al. (voir J. Chem. Soc., pp 2705 - 2713, 1926). Le 4 amino 4′ nitrobiphényle a été obtenu selon la méthode de R. BELCHER et al. (voir J. Chem. Soc., p. 1336, 1953).

La synthèse du 4 (N acétate d'éthyle amino) 4′ nitrobiphényle se fait selon le même mode opératoire que le 4 (N acétate d'éthyle amino) nitrobenzène. Le produit brut est purifié par chromotographie sur gel de silice (avec le toluène comme éluant) et recristallisations dans le méthanol et le cyclohexane.

Le rendement de la synthèse est de 12 %. Le point de fusion du colorant obtenu est 163,5 °C.

Le maximum d'absorption est obtenu pour = 374,6 nm (spectre UV fait avec le chloroforme comme solvant).

Ce colorant est soluble jusqu'à 5 % dans le P (VDCN -VAc) et a permis d'obtenir après orientation sous champ électrique un coefficient $d_{33}$ égal à 5 pm/V à 1,06 $\mu$m.

EXEMPLE III

Cet exemple concerne l'élaboration de la molécule représentée à la figure 3 et pour laquelle R = $CH_3$, x = 2 et n = 1. Il s'agit donc du 4 (N, N acétate de diéthanol amino) nitrobenzène. Ce colorant est synthétisé en deux étapes à partir du 4 fluoronitrobenzène selon le schéma réactionnel représenté à la figure 13.

. Synthèse du 4 (N, N diéthanol amino) nitrobenzène.

Dans un erlenmeyer de 100 ml, on introduit 5,64 g de 4 fluoronitrobenzène, 3,27g de N, N diéthanolamine, 4,39 g de carbonate de potassium, 1 goutte d'aliquat 336 et 30 ml d'hexaméthylphosphortriamide (HMPA). On chauffe à 90 °C pendant 15 heures. Le mélange réactionnel est coulé dans l'eau. On obtient un solide jaune qu'on sépare par filtration. Le produit brut est lavé l'eau puis à l'hexane. Il est purifié par recristallisation dans un mélange hexane-éthanol. Le point de fusion du colorant obtenu est 104,5 °C.

. Synthèse du 4 (N, N acétate de diéthanol amino) nitrobenzène.

Dans un erlenmeyer de 50 ml, on dissout 1,5g de 4 (N, N diéthanolamino) nitrobenzène dans un mélange de 1,47g de triéthylamine et 10 ml de tétrahydrofuranne (THF). Le mélange réactionnel est refroidi à 0 °C et on ajoute goutte à goutte 1,14g de chlorure d'acétyle. On laisse revenir à température ambiante et on ajoute 1,1g de chlorure d'acétyle et 1,47 g de triéthylamine. On continue d'agiter pendant 1 H 30 et on coule dans une solution diluée d'acide chlorhydrique.

Le solide qui précipite est séparé par filtration. Le produit brut est purifié par chromotographie sur gel

de silice (avec l'acétate d'éthyle comme éluant), suivie d'une recristallisation dans un mélange éthanol-hexane.

Le maximum d'absorption est obtenu pour = 378 nm (spectre UV fait avec le chloroforme comme solvant). Le point de fusion du colorant obtenu est 89,5° C.

EXEMPLE IV

Cet exemple concerne l'élaboration de la molécule représentée à la figure 4 et pour laquelle R = $CH_3CH_2$. Il s'agit donc du 4 (dicyanovinyl) 4′ (4″ propanoyloxypipéridino) phényle. Ce colorant est synthétisé en trois étapes à partir du 4 fluorobenzaldéhyde selon le schéma réactionnel représenté à la figure 14.

. Synthèse du 4 (4′ hydroxypipéridino) benzaldéhyde.

Cet aldéhyde est obtenu dans les mêmes conditions expérimentales que le 4 (N, N diéthanol amino) nitrobenzène. Le solvant de recristallisation est le toluène. Le rendement de la réaction est de 56,5 %. Le point de fusion du produit obtenu est 116,5° C.

. Synthèse du 4 (4′ hydroxypipéridino) dicyanovinyl phényle.

Dans un erlenmeyer de 50 ml, on dissout 2,05 g de 4 (4′ hydroxypipéridino) benzaldéhyde et 0,55 g de malodinitrile dans 5 ml de n butanol. On ajoute une goutte de pipéridine et on agite pendant 10 mn. Le milieu prend en masse. On filtre et on lave l'insoluble à l'hexane. Le produit brut est recristallisé dans le benzène.

Le point de fusion du produit obtenu est de 145° C.

. Synthèse du 4 (dicyanovinyl) 4′ (4″ propanoyloxypipéridino) phényle.

Dans un erlenmeyer de 50 ml, on dissout 0,506 g de 4 (4′ hydroxypipéridino) 4″ dicyanovinyl phényle dans 10 ml de $CH_2Cl_2$, puis on ajoute 0,148 g d'acide propionique, 0,5 g de dicyclohexylcarbodiimide (DCCI) et 0,05 g de pipéridinopipéridine.

On agite à température ambiante pendant 4 H 30, puis on ajoute pour compléter la réaction 0,15 g d'acide propionique, 0,5 g de DCCI et 0,05 g de pipéridinopipéridine. On continue d'agiter pendant 13 H 30.

On élimine l'urée par filtration. Le filtrat est évaporé à sec et on purifie le produit brut ainsi obtenu par chromatographie sur gel de silice (avec l'acétate d'éthyle comme éluant) suivie d'une recristallisation dans un mélange hexane-éthanol 90/10.

Le point de fusion du produit obtenu est 117,8° C. Le maximum d'absorption est obtenu pour = 428,6 nm (spectre UV fait avec le chloroforme comme solvant).

EXEMPLE V

Cet exemple concerne l'élaboration de la molécule représentée à la figure 6 et pour laquelle R = $C_2H_5$ et n = 1. Il s'agit donc du sulfure de 4 (nitrophényl) et d'acétate d'éthyle. Ce colorant est synthétisé en une étape à partir du nitrothiophénol selon le schéma réactionnel représenté à la figure 15.

Dans un erlenmeyer de 50 ml, on dissout à chaud 0,56 g de KOH dans 20 ml d'éthanol. On refroidit la solution à température ambiante et on ajoute 1,55 g de 4 nitrothiophénol. Une coloration rouge apparaît. On chauffe 10 mn à reflux puis on évapore l'éthanol. On ajoute 20 ml de toluène, quelques grains d'éther couronne 18 - 6 et on ajoute goutte à goutte une solution de 1,67 g de bromoacétate d'éthyle dans 5 ml de toluène. On chauffe à reflux pendant 2 heures et du bromure de potassium précipite. Le bromure est éliminé par filtration. Le filtrat est évaporé à sec. Le produit brut est purifié par chromatographie sur gel de silice (avec du benzène comme éluant) suivie d'une recristallisation à 5° C dans un mélange hexane - éthanol 90/10.

Le rendement de la réaction est de 75,5 %. Le point de fusion du produit obtenu est de 44,5° C.

Le maximum d'absorption est obtenu pour = 331,8 nm (spectre UV fait avec le chloroforme comme solvant).

La préparation de l'ensemble des colorants dont les formules sont représentées aux figures 2 à 10 ne pose pas de problème particulier à l'homme de l'art, si on tient compte des exemples I à V cités plus haut.

## Revendications

1. Matériau organique actif en optique non linéaire caractérisé en ce qu'il comprend une matrice de

polymère ferroélectrique dopée par un colorant, ledit colorant ayant ses molécules formées d'un ensemble constitué d'un système à électrons ¶ conjugués possédant à l'une de ses extrémités un groupe accepteur d'électrons, à son autre extrémité un groupe donneur d'électrons, un ou plusieurs groupes procurant au colorant une solubilité élevée dans le polymère ferroélectrique et étant rattaché audit ensemble du côté du groupe donneur d'électrons.

2. Matériau organique, selon la revendication 1, caractérisé en ce que le système à électrons ¶ conjugués du colorant est constitué par un ou deux noyaux benzéniques.

3. Matériau organique, selon l'une des revendications 1 ou 2, caractérisé en ce que le groupe accepteur d'électrons du colorant est - $NO_2$ ou -CH = C- $(CN)_2$.

4. Matériau organique, selon l'une quelconque des revendications 1 à 3, caractérisé en ce que le groupe donneur d'électrons du colorant est constitué à partir d'un atome d'azote ou de soufre.

5. Matériau organique selon la revendication 1, caractérisé en ce que les molécules de colorant répondent à la formule chimique suivante :

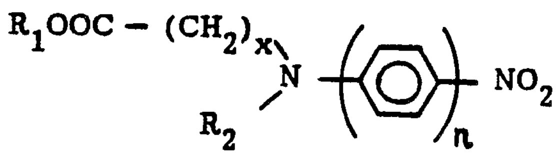

**avec n = 1 ou 2**

$R_1$ = $C_mH_{2m+1}$ ou $C_mF_{2m+1}$ et $1 < m < 10$
$R_2$ = H ou $C_pH_{2p+1}$ et $1 < p < 10$
$1 < x < 10$

6. Matériau organique selon la revendication 1, caractérisé en ce que les molécules de colorant répondent à la formule chimique suivante :

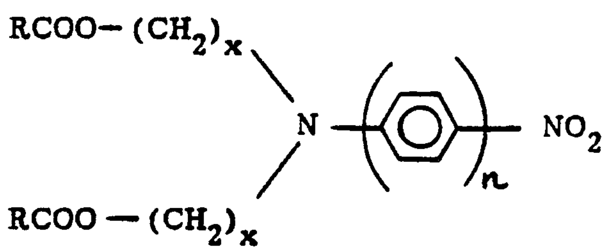

avec n = 1 ou 2
R = $c_mH_{2m+1}$ ou $C_mF_{2m+1}$ et $1 < m < 10$
$2 < x < 10$

7. Matériau organique selon la revendication 1, caractérisé en ce que les molécules de colorant répondent à la formule chimique suivante :

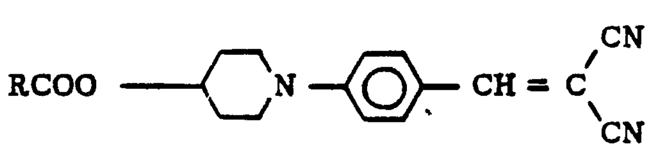

avec R = $C_mH_{2m+1}$ ou $C_mF_{2m+1}$ et $1 < m < 10$

8. Matériau organique selon la revendication 1, caractérisé en ce que les molécules du colorant répondent à la formule chimique suivante :

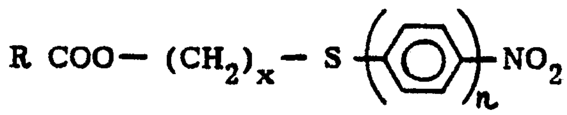

avec n = 1 ou 2
R = $C_mH_{2m+1}$ ou $C_mF_{2m+1}$ et $1 < m < 10$
$1 < x < 10$

9. Matériau organique selon la revendication 1, caractérisé en ce que les molécules de colorant répondent à la formule chimique suivante :

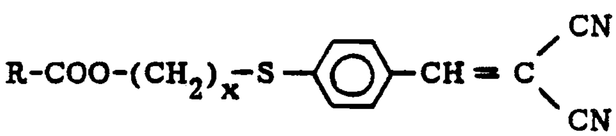

10. Matériau organique selon la revendication 1, caractérisé en ce que le polymère ferroélectrique est un copolymère tel que le copolymère de difluorure de vinylidène trifluorure de vinylidène ou le copolymère alterné dicyanure de vinylidène-acétate de vinyle.

11. Colorant, notamment destiné à être incorporé à une matrice organique active en optique non linéaire caractérisé en ce que ses molécules répondent à la formule chimique suivante :

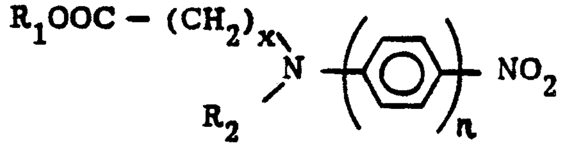

avec n = 1 ou 2
$R_1$ = $C_mH_{2m+1}$ ou $C_mF_{2m+1}$ et $1 < m < 10$
$R_2$ = H ou $C_pH_{2p+1}$ et $1 < p < 10$
$1 < x < 10$

12. Colorant, notamment destiné à être incorporé à une matrice organique active en optique non linéaire caractérisé en ce que ses molécules répondent à la formule chimique suivante :

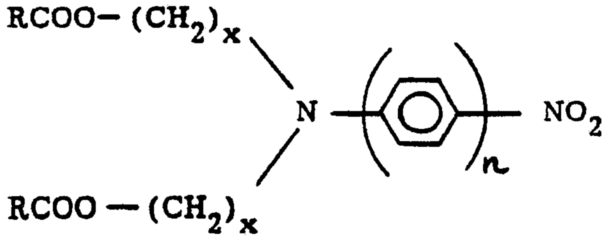

R = $C_mH_{2m+1}$ ou $C_mF_{2m+1}$ et $1 < m < 10$
$2 < x < 10$ avec n = 1 ou 2

13. Colorant, notamment destiné à être incorporé à une matrice organique active en optique non linéaire caractérisé en ce que ses molécules répondent à la formule chimique suivante :

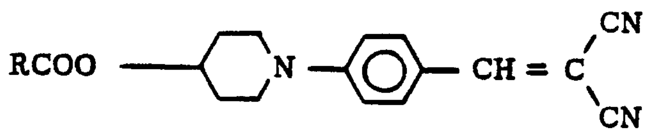

avec R : $C_mH_{2m+1}$ ou $C_mF_{2m+1}$ et $1 < m < 10$

14. Colorant, notamment destiné à être incorporé à une matrice organique active en optique non linéaire caractérisé en ce que ses molécules répondent à la formule chimique suivante :

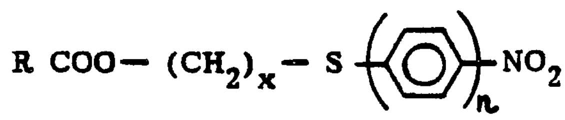

avec n = 1 ou 2

R = $C_mH_{2m+1}$ ou $CmF_{2m+1}$ et $1 < m < 10$

15. Colorant, notamment destiné à être incorporé à une matrice organique active en optique non linéaire caractérisé en ce que ses molécules répondent à la formule chimique suivante :

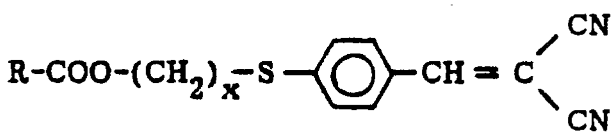

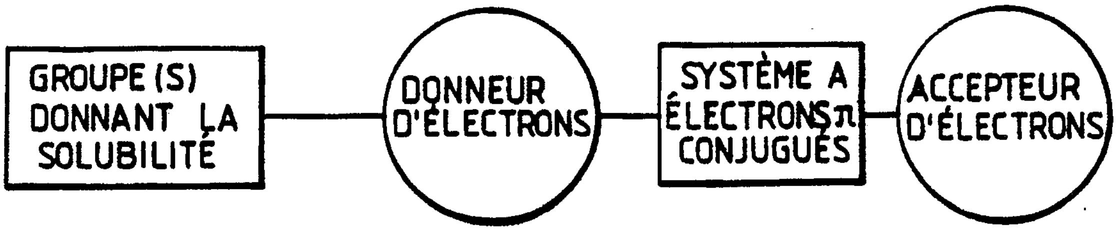


FIG.1

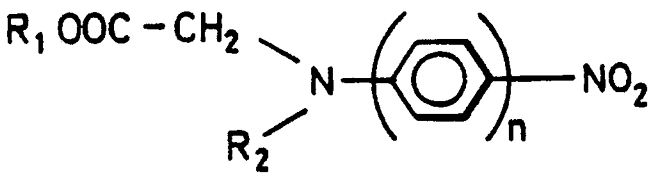

FIG.2

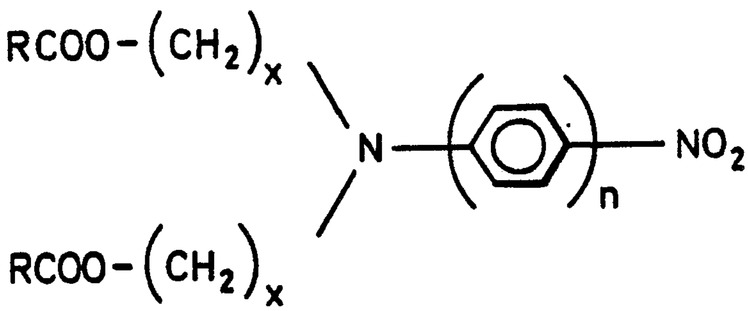

FIG.3

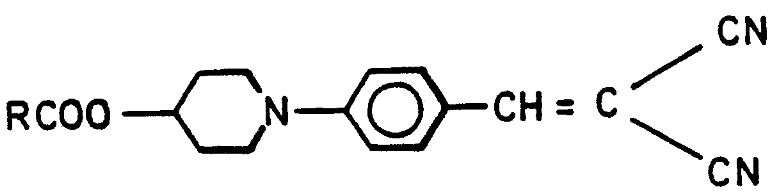

FIG.4

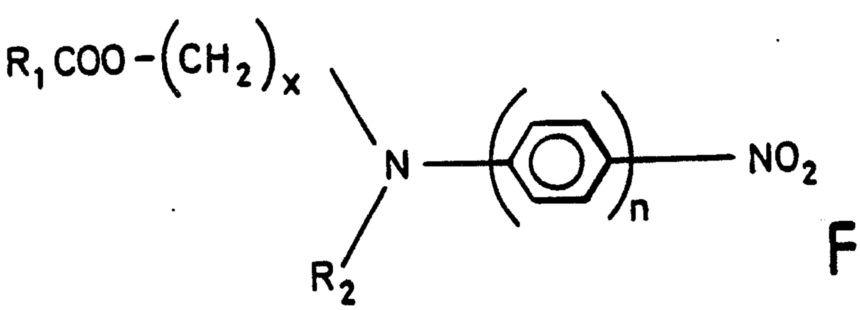

FIG.5

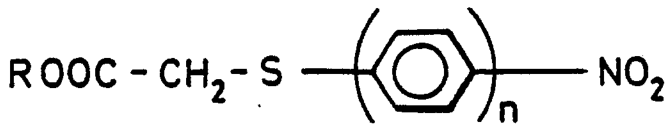

FIG. 6

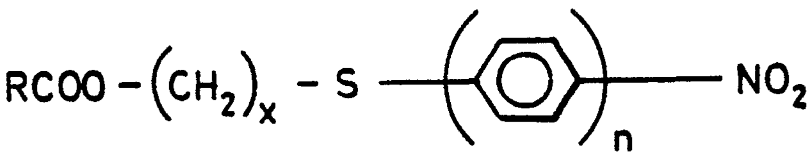

FIG. 7

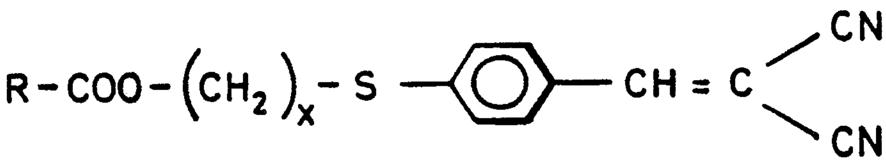

FIG. 8

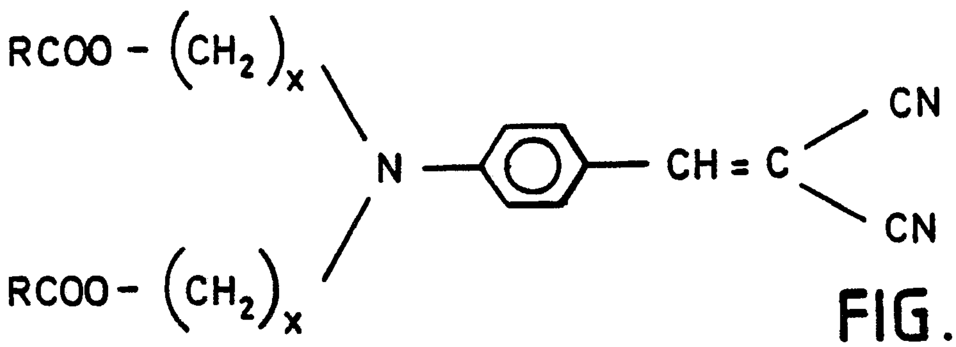

FIG. 9

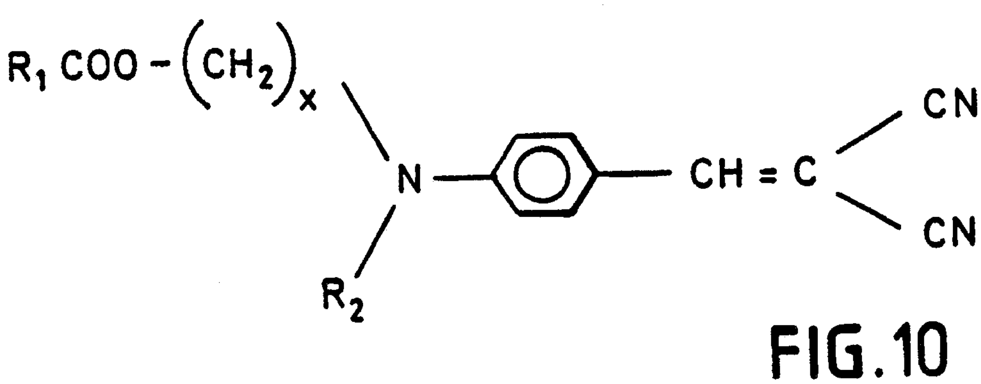

FIG. 10

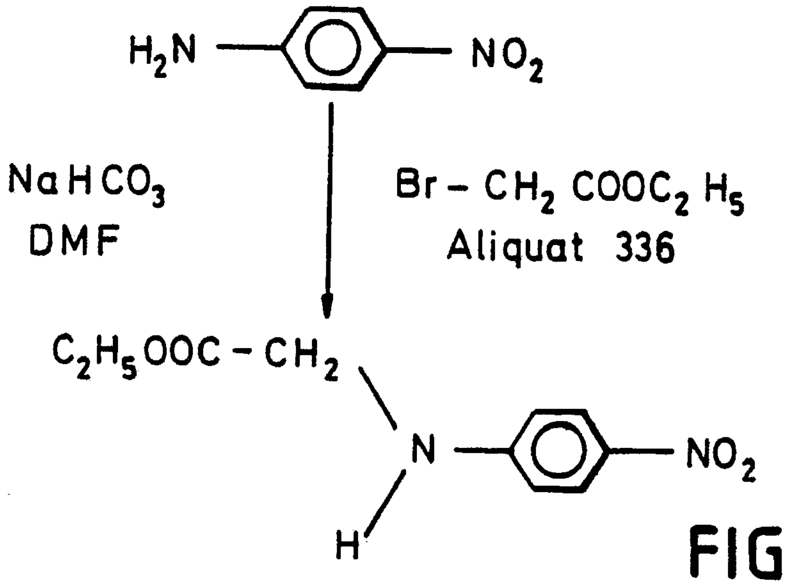
NaHCO3
DMF
Br - CH2 COOC2 H5
Aliquat 336

FIG.11

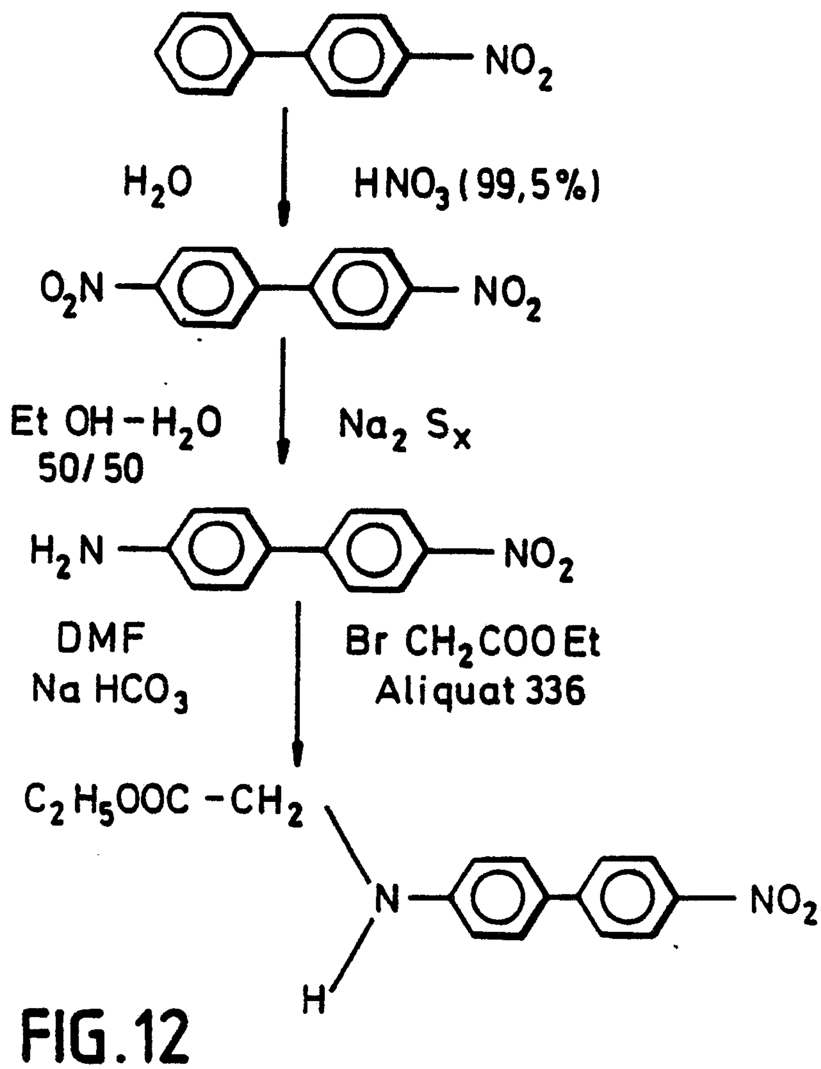
H2O
HNO3 (99,5%)
Et OH - H2O
50/50
Na2 Sx
DMF
Na HCO3
Br CH2COO Et
Aliquat 336

FIG.12

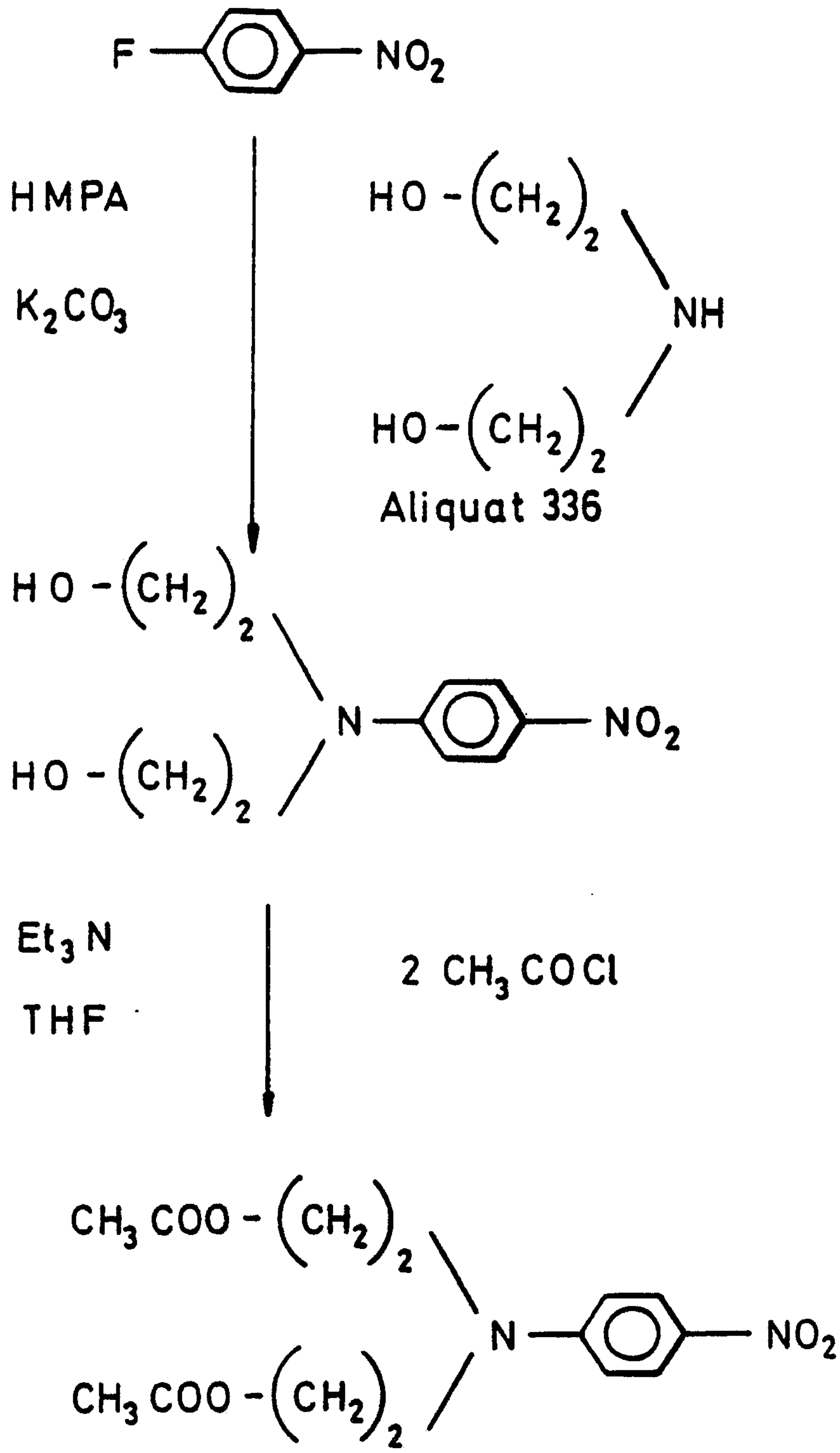


FIG. 13

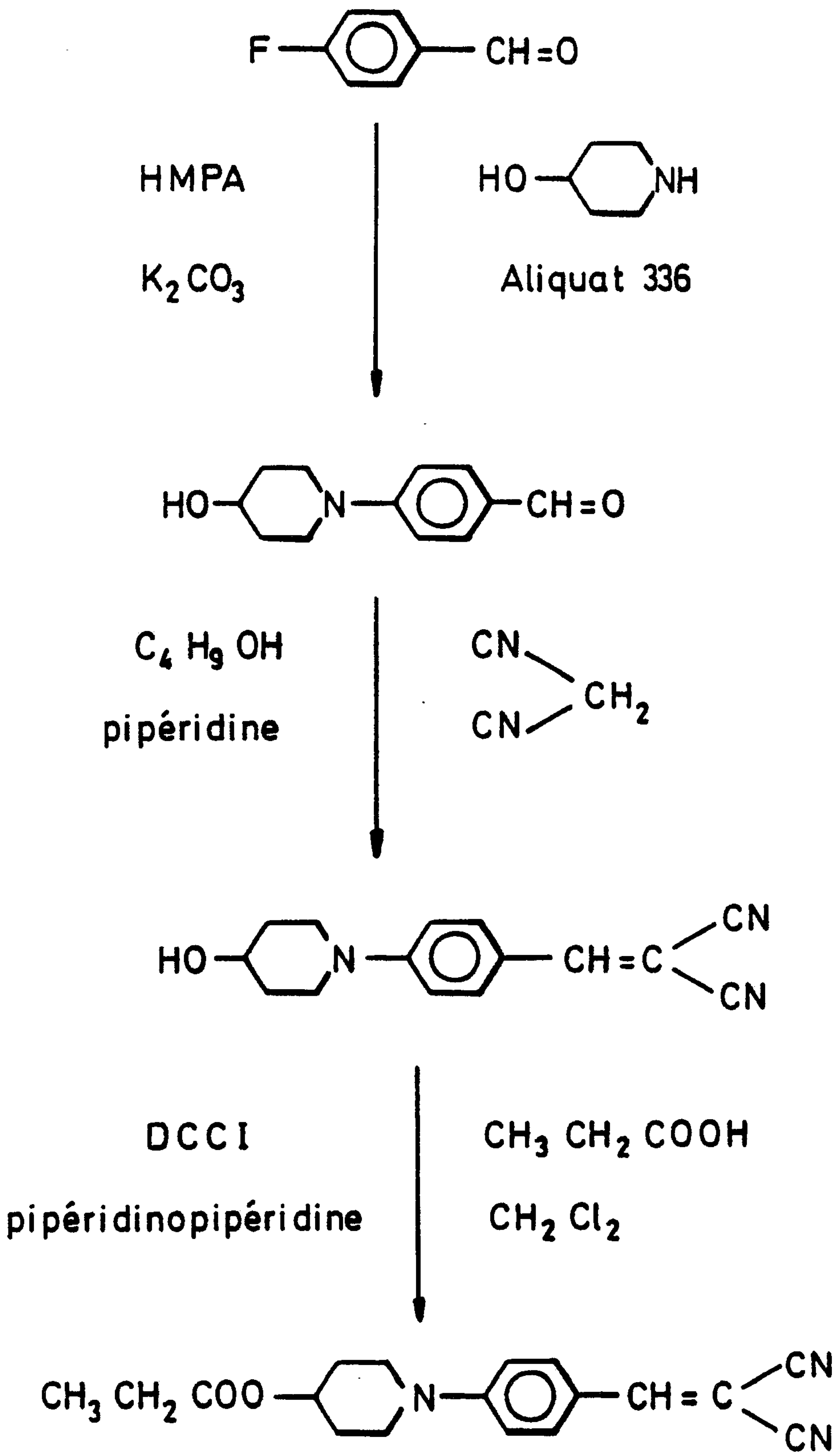
HMPA
K2CO3
Aliquat 336
C4 H9 OH
pipéridine
DCCI
pipéridinopipéridine
CH3 CH2 COOH
CH2 Cl2

FIG.14

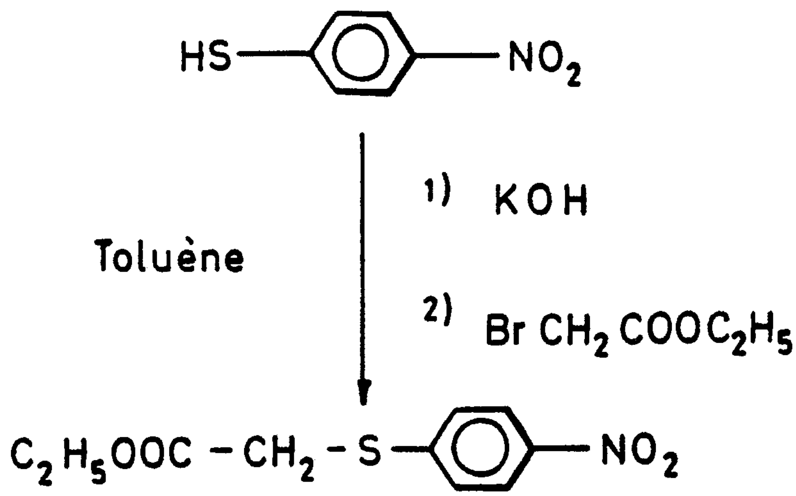


FIG. 15

Office européen des brevets

# RAPPORT DE RECHERCHE EUROPEENNE

Numero de la demande

EP 90 40 2311

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 284 229 (CANON K.K.)<br>* Revendications; page 7, ligne 31 - page 8, ligne 10 * | 1-16 | C 09 B 23/14<br>C 09 B 51/00<br>G 02 F 1/35 |
| A | ELECTRONICS LETTERS, vol. 23, no. 13, 18 juin 1987, pages 700-701, IEE, Stevenage, GB; J.R. HILL et al.: "Efficient frequency-doubling in a poled PVDF copolymer guest/host composite"<br>* En entier * | 1-16 | |
| A | US-A-2 583 551 (J.B. DICKEY et al.)<br>* Revendications 1-3; exemples 1,2,6; colonne 1, ligne 52 - colonne 2, ligne 25 * | 1-4,7, 13 | |
| A | DE-A-1 619 395 (CLAIROL INC.)<br>* Exemples 2,3; page 1, paragraphe 2 - page 2, paragraphe 2; page 13, lignes 3-19 * | 1-6,11, 12 | DOMAINES TECHNIQUES RECHERCHES (Int. Cl.5) |
| A | FR-A-1 509 386 (J.R. GEIGY S.A.)<br>* Résumé 1; tableau 1; exemples 13,14,16 * | 1-4,8, 14 | C 09 B<br>G 02 F |

Le présent rapport a été établi pour toutes les revendications

| Lieu de la recherche | Date d'achèvement de la recherche | Examinateur |
|---|---|---|
| LA HAYE | 17-09-1990 | GINOUX C.R.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)